# EUROPEAN PATENT APPLICATION

(11) **EP 4 475 394 A1**
(43) Date of publication of application: **11.12.2024**
(21) Application number: 24179270.4
(22) Date of filing: 31.05.2024
(51) Int. Cl.: H02K 1/2746, H02K 7/14, H02K 21/16

(54) **POWER TOOL MOTOR ROTOR CONFIGURATIONS**

(30) Priority: 01.06.2023 US 202363505523 P
(71) Applicant: Milwaukee Electric Tool Corporation, Brookfield, WI 53005 (US)
(72) Inventor: FARHAN, Ashad, Brookfield, 53005 (US); BOULANGER, Keith, Twin Lakes, 53181 (US); HESSENBERGER, Jeffrey C, Neosho, 53059 (US); EMERSON, Linnea, Lisbon, 53089 (US); NEMEC, Jacob N, Waldo, 53093 (US); BAILEY, Matthew R, Racine, 53402 (US)
(74) Representative: Forresters IP LLP

(57) **Abstract**

A power tool including a battery pack interface and a consequent pole motor. The battery pack interface is configured to receive a removable and rechargeable battery pack. The consequent pole motor includes a stator including a plurality of stator teeth configured to receive a plurality of stator coils, and a rotor configured to rotate with respect to the stator. The rotor includes a first permanent magnet positioned within the rotor, a second permanent magnet positioned within the rotor, and a consequent pole located between the first permanent magnet and the second permanent magnet. The consequent pole has a length and a width. The consequent pole is made of a non-magnetic material.

## Description

### RELATED APPLICATIONS

This application claims the benefit of U.S. Provisional Patent Application No. 63/505,523, filed June 1, 2023, the entire content of which is hereby incorporated by reference.

### FIELD

Embodiments described herein relate to a motor of a power tool.

### SUMMARY

Power tools described herein include a battery pack interface configured to receive a battery pack and a motor. The motor includes a stator including a plurality of stator teeth configured to receive a plurality of stator windings, and a rotor configured to rotate with respect to the stator. The rotor includes a first permanent magnet within the rotor, a second permanent magnet within the rotor, and a consequent pole located between the first permanent magnet and the second permanent magnet. The consequent pole has a length and a width. The consequent pole is made of a non-magnetic material.

In some aspects, the first permanent magnet and the second permanent magnet are composed of a rare earth metal.

In some aspects, the rotor includes a lamination stack including an inner lamination portion and an outer lamination portion, wherein an air gap is located between the inner lamination portion and the outer lamination portion.

In some aspects, the consequent pole is constructed from the lamination stack.

In some aspects, the inner lamination portion includes a first axial support portion, and the outer lamination portion includes a second axial support portion.

In some aspects, the rotor includes an outer diameter of approximately 22 millimeters.

In some aspects, the rotor further includes a lamination stack, a first slot including a first magnet housing portion configured to receive the first permanent magnet, a second slot including a second magnet housing portion configured to receive the second permanent magnet, and a plurality of air gaps, wherein each of the plurality of air gaps includes an injection molded material.

In some aspects, one of the plurality of air gaps is enclosed by an outer rib of the lamination stack.

Power tools described herein include a battery pack interface configured to receive a battery pack and a consequent pole motor. The consequent pole motor includes a stator including a plurality of stator teeth configured to receive a plurality of stator windings, and a rotor configured to rotate with respect to the stator. The rotor includes a first permanent magnet within a first slot of the rotor, a second permanent magnet within a second slot of the rotor, a first consequent pole between the first permanent magnet and the second permanent magnet, the first consequent pole having a first length and a first width, and a second consequent pole between the first permanent magnet and the second permanent magnet, the second consequent pole having a second length and a second width.

In some aspects, the first permanent magnet and the second permanent magnet are composed of a rare earth metal.

In some aspects, the rotor includes a lamination stack including an inner lamination portion and an outer lamination portion, wherein an air gap is located between the inner lamination portion and the outer lamination portion, and wherein the air gap is enclosed by an outer rib of the lamination stack.

In some aspects, the first consequent pole and the second consequent pole are constructed from the lamination stack.

In some aspects, the inner lamination portion includes a first axial support portion, and the outer lamination portion includes a second axial support portion.

In some aspects, the rotor further includes a lamination stack, a first slot including a first magnet housing portion configured to receive the first permanent magnet, a second slot including a second magnet housing portion configured to receive the second permanent magnet, and a plurality of air gaps, wherein each of the plurality of air gaps includes an injection molded material, wherein one of the plurality of air gaps is enclosed by an outer rib of the lamination stack.

Consequent pole motors described herein include a stator including a plurality of stator teeth configured to receive a plurality of stator windings, and a rotor configured to rotate around the stator. The rotor includes a lamination stack including an inner lamination portion and an outer lamination portion, a first permanent magnet located within a first slot of the lamination stack, the first slot being between the inner lamination portion and the outer lamination portion, a second permanent magnet located within a second slot of the lamination stack, the second slot being between the inner lamination portion and the outer lamination portion, a first consequent pole located between the first permanent magnet and the second permanent magnet, the first consequent pole having a first length and a first width, a second consequent pole located between the first permanent magnet and the second permanent magnet, the second consequent pole having a second length and a second width, and an air gap located between the inner lamination portion and the outer lamination portion.

In some aspects, the first consequent pole and the second consequent pole are constructed from the lamination stack.

In some aspects, the first permanent magnet and the second permanent magnet are composed of a rare earth metal, and the first consequent pole and the second consequent pole are constructed from a non-magnetic material.

In some aspects, the air gap is enclosed by an outer rib of the lamination stack.

In some aspects, the air gap is filled with an injection molded material.

In some aspects, the rotor further includes a first retention portion configured to retain the inner lamination portion and a second retention portion configured to retain the outer lamination portion, and the first retention portion and the second retention portion are connected via a plate.

Before any embodiments are explained in detail, it is to be understood that the embodiments are not limited in application to the details of the configurations and arrangements of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Accordingly, in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

Other aspects of the embodiments will become apparent by consideration of the detailed description and accompanying drawings.

### BRIEF DESCRIPTION OF THE DRAWINGS

FIG. 1 illustrates a perspective view of a power tool, according to some embodiments.
FIG. 2 illustrates a block diagram of a control system of the power tool of FIG. 1, according to some embodiments.
FIG. 3 illustrates a battery pack for use with the power tool of FIG. 1, according to some embodiments.
FIG. 4 illustrates a block diagram of a control system of the battery pack of FIG. 3, according to some embodiments.
FIG. 5 illustrates an internal permanent magnet motor rotor, according to some embodiments.
FIG. 6A illustrates an internal permanent magnet motor, according to some embodiments.
FIG. 6B illustrates an internal permanent magnet motor, according to some embodiments.
FIG. 6C illustrates an internal permanent magnet motor, according to some embodiments.
FIG. 6D illustrates an internal permanent magnet motor, according to some embodiments.
FIG. 7 illustrates a consequent pole motor, according to some embodiments.
FIG. 8 graphically illustrates performance of various motors, according to some embodiments.
FIG. 9 illustrates a consequent pole motor, according to some embodiments.
FIG. 10 graphically illustrates performance of various motors, according to some embodiments.
FIG. 11 illustrates an internal permanent magnet motor, according to some embodiments.
FIG. 12 graphically illustrates performance of various motors, according to some embodiments.
FIG. 13 illustrates a permanent magnet motor, according to some embodiments.
FIG. 14 illustrates a permanent magnet motor, according to some embodiments.
FIG. 15 illustrates a permanent magnet motor, according to some embodiments.
FIG. 16 graphically illustrates performance of various motors, according to some embodiments.
FIG. 17 illustrates a permanent magnet motor, according to some embodiments.

### DETAILED DESCRIPTION

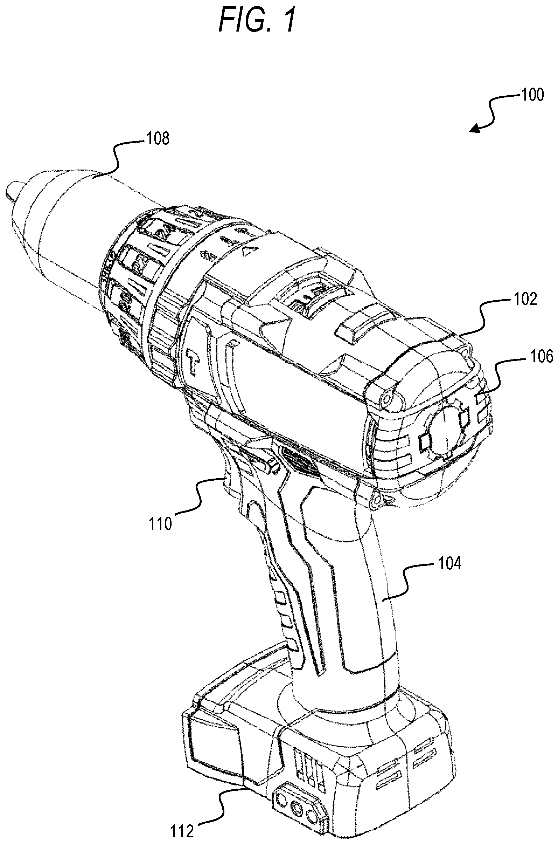

FIG. 1 illustrates a power tool 100 including a permanent magnet motor. The power tool 100 is, for example, a hammer drill including a housing 102. The housing 102 includes a handle portion 104 and motor housing portion 106. The power tool 100 further includes an output driver 108 (illustrated as a chuck), a trigger 110, and a battery pack interface 112. The battery pack interface 112 is configured to mechanically and electrically connect to or receive a power tool battery pack. Although FIG. 1 illustrates a hammer drill, in some embodiments, the components described herein are incorporated into other types of power tools including drill-drivers, impact drivers, impact wrenches, angle grinders, circular saws, reciprocating saws, plate compactors, core drills, string trimmers, leaf blowers, vacuums, and the like. In a permanent magnet motor power tool, such as power tool 100, switching elements are selectively enabled and disabled by control signals from a controller to selectively apply power from a power source (e.g., a battery pack) to drive a permanent magnet motor.

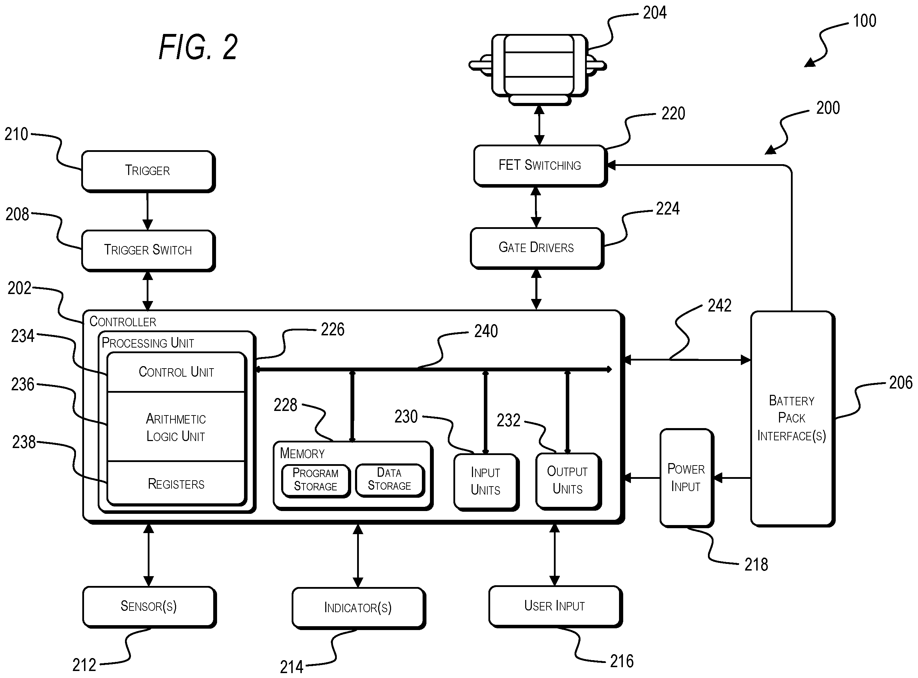

FIG. 2 illustrates a control system 200 for the power tool 100. The control system 200 includes a controller 202. The controller 202 is electrically and/or communicatively connected to a variety of modules or components of the power tool 100. For example, the illustrated controller 202 is electrically connected to a motor 204, a battery pack interface 206, a trigger switch 208 (connected to a trigger 210), one or more sensors or sensing circuits 212, one or more indicators 214, a user input module 216, a power input module 218, an inverter bridge or FET switching module 220 (e.g., including a plurality of switching FETs), and gate drivers 224 for driving the FET switching module 220. In some embodiments, motor 204 is a permanent magnet motor. The controller 202 includes combinations of hardware and software that are operable to, among other things, control the operation of the power tool 100, monitor the operation of the power tool 100, activate the one or more indicators 214 (e.g., an LED), etc.

The controller 202 includes a plurality of electrical and electronic components that provide power, operational control, and protection to the components and modules within the controller 202 and/or the power tool 100. For example, the controller 202 includes, among other things, a processing unit 226 (e.g., a microprocessor, a microcontroller, an electronic controller, an electronic processor, or another suitable programmable device), a memory 228, input units 230, and output units 232. The processing unit 226 includes, among other things, a control unit 234, an arithmetic logic unit ("ALU") 236, and a plurality of registers 238, and is implemented using a known computer architecture (e.g., a modified Harvard architecture, a von Neumann architecture, etc.). The processing unit 226, the memory 228, the input units 230, and the output units 232, as well as the various modules or circuits connected to the controller 202 are connected by one or more control and/or data buses (e.g., common bus 240). The control and/or data buses are shown generally in FIG. 2 for illustrative purposes. The use of one or more control and/or data buses for the interconnection between and communication among the various modules, circuits, and components would be known to a person skilled in the art in view of the embodiments described herein.

The memory 228 is a non-transitory computer readable medium and includes, for example, a program storage area and a data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 226 is connected to the memory 228 and executes software instructions that are capable of being stored in a RAM of the memory 228 (e.g., during execution), a ROM of the memory 228 (e.g., on a generally permanent basis), or another non-transitory computer readable medium such as another memory or a disc. Software included in the implementation of the power tool 100 can be stored in the memory 228 of the controller 202. The software includes, for example, firmware, one or more applications, program data, filters, rules, one or more program modules, and other executable instructions. The controller 202 is configured to retrieve from the memory 228 and execute, among other things, instructions related to the control processes and methods described herein. In other constructions, the controller 202 includes additional, fewer, or different components.

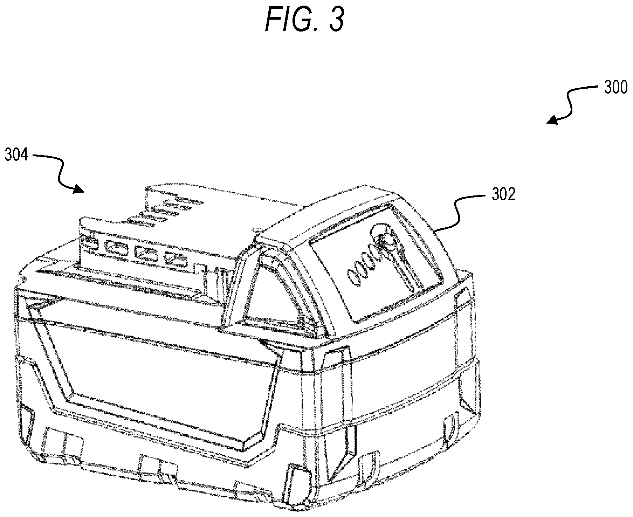

The battery pack interface 206 includes a combination of mechanical components (e.g., rails, grooves, latches, etc.) and electrical components (e.g., one or more terminals) configured to and operable for interfacing (e.g., mechanically, electrically, and communicatively connecting) with a battery pack. For example, power provided by a battery pack 300 (see FIG. 3) to the power tool 100 is provided through the battery pack interface 206 to the power input module 218. The power input module 218 includes combinations of active and passive components to regulate or control the power received from the battery pack 300 prior to power being provided to the controller 202. The battery pack interface 206 also supplies power to the FET switching module 220 to be switched by the switching FETs to selectively provide power to the motor 204. The battery pack interface 206 also includes, for example, a communication line 242 for providing a communication line or link between the controller 202 and the battery pack 300.

The sensor circuits 212 include one or more current sensors, one or more speed sensors, one or more Hall effect sensors, one or more temperature sensors, etc. The indicators 214 include, for example, one or more light-emitting diodes ("LEDs"). The indicators 214 can be configured to display conditions of, or information associated with, the power tool 100. For example, the indicators 214 are configured to indicate measured electrical characteristics of the power tool 100, the status of the power tool, the status the motor 204, etc. The user input module 216 is operably coupled to the controller 202 to, for example, select a forward mode of operation or a reverse mode of operation, a torque and/or speed setting for the power tool 100 (e.g., using torque and/or speed switches), etc. In some embodiments, the user input module 216 includes a combination of digital and analog input or output devices required to achieve a desired level of operation for the power tool 100, such as one or more knobs, one or more dials, one or more switches, one or more buttons, etc.

FIG. 3 illustrates a battery pack 300. The battery pack 300 includes a housing 302 and an interface portion 304 for connecting the battery pack 300 to a power tool, such as the power tool 100.

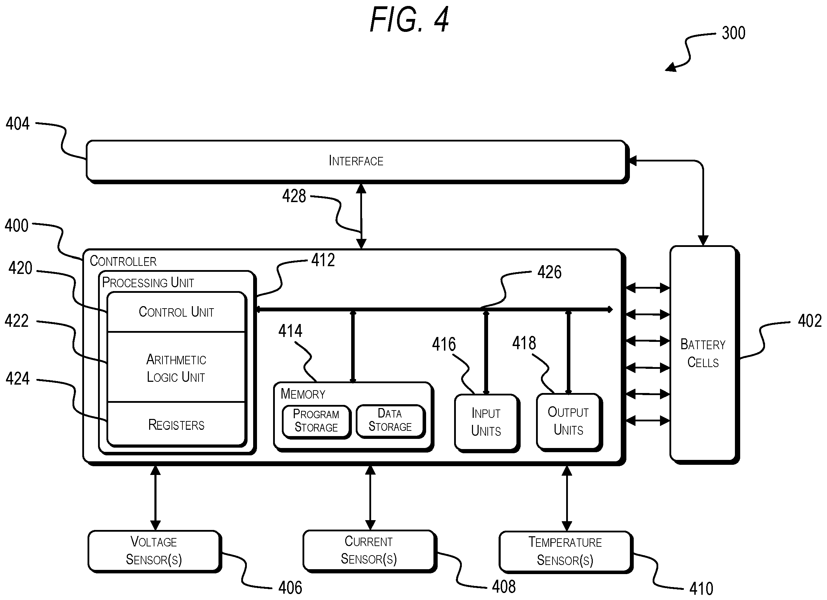

FIG. 4 illustrates a control system for the battery pack 300. The control system includes a controller 400. The controller 400 is electrically and/or communicatively connected to a variety of modules or components of the battery pack 300. For example, the illustrated controller 400 is connected to one or more battery cells 402 and an interface 404 (e.g., the interface portion 304 of the battery pack 300 illustrated in FIG. 3). The controller 400 is also connected to one or more voltage sensors or voltage sensing circuits 406, one or more current sensors or current sensing circuits 408, and one or more temperature sensors or temperature sensing circuits 410. The controller 400 includes combinations of hardware and software that are operable to, among other things, control the operation of the battery pack 300, monitor a condition of the battery pack 300, enable or disable charging of the battery pack 300, enable or disable discharging of the battery pack 300, etc.

The controller 400 includes a plurality of electrical and electronic components that provide power, operational control, and protection to the components and modules within the controller 400 and/or the battery pack 300. For example, the controller 400 includes, among other things, a processing unit 412 (e.g., a microprocessor, a microcontroller, an electronic processor, an electronic controller, or another suitable programmable device), a memory 414, input units 416, and output units 418. The processing unit 412 includes, among other things, a control unit 420, an ALU 422, and a plurality of registers 424, and is implemented using a known computer architecture (e.g., a modified Harvard architecture, a von Neumann architecture, etc.). The processing unit 412, the memory 414, the input units 416, and the output units 418, as well as the various modules or circuits connected to the controller 400 are connected by one or more control and/or data buses (e.g., common bus 426). The control and/or data buses are shown generally in FIG. 4 for illustrative purposes. The use of one or more control and/or data buses for the interconnection between and communication among the various modules, circuits, and components would be known to a person skilled in the art in view of the embodiments described herein.

The memory 414 is a non-transitory computer readable medium and includes, for example, a program storage area and a data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 412 is connected to the memory 414 and executes software instructions that are capable of being stored in a RAM of the memory 414 (e.g., during execution), a ROM of the memory 414 (e.g., on a generally permanent basis), or another non-transitory computer readable medium such as another memory or a disc. Software included in the implementation of the battery pack 300 can be stored in the memory 414 of the controller 400. The software includes, for example, firmware, one or more applications, program data, filters, rules, one or more program modules, and other executable instructions. The controller 400 is configured to retrieve from the memory 414 and execute, among other things, instructions related to the control processes and methods described herein. In other constructions, the controller 400 includes additional, fewer, or different components.

The interface 404 includes a combination of mechanical components (e.g., rails, grooves, latches, etc.) and electrical components (e.g., one or more terminals) configured to and operable for interfacing (e.g., mechanically, electrically, and communicatively connecting) the battery pack 300 with another device (e.g., a power tool, a battery pack charger, etc.). For example, the interface 404 is configured to communicatively connect to the controller 400 via a communications line 428.

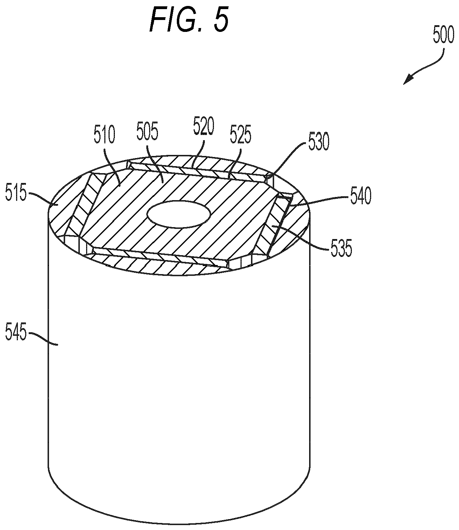

FIG. 5 illustrates an internal permanent magnet motor rotor 500, according to some embodiments. The rotor 500 includes a lamination stack 505. The lamination stack 505 includes an inner lamination portion 510 and an outer lamination portion 515. The rotor 500 includes a plurality of slots 520, and each slot includes a magnet housing portion 525 configured to receive a magnet 530. The magnet 530 includes a length 535 and a width 540. The rotor 500 also includes a rotor sleeve 545. In some embodiments, the rotor sleeve 545 is made of a carbon fiber material. In some embodiments, the carbon fiber sleeve is made of another material, such as a plastic, a non-magnetic metal, a polycarbonate, or the like. The rotor 500 is configured to rotate with respect to a stator.

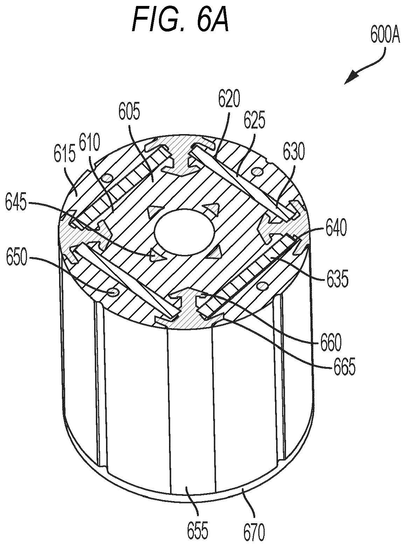

FIG. 6A-6D illustrate internal permanent magnet motor rotors 600A, 600B, 600C, 600D, according to some embodiments. As illustrated in FIG. 6A, the rotor 600A includes a lamination stack 605. The lamination stack 605 includes an inner lamination portion 610 and an outer lamination portion 615. The rotor 600A includes a plurality of slots 620, and each slot 620 includes a magnet housing portion 625 configured to receive a magnet 630. The magnet 630 includes a length 635 and a width 640. The inner lamination portion 610 of the lamination stack 605 includes a first axial support portion 645. The outer lamination portion 615 of the lamination stack 605 includes a second axial support portion 650. In some embodiments, a plastic mold 655 is configured to retain the inner lamination portion 610 and the outer lamination portion 615 of the lamination stack 605. The plastic mold 655 may include a first retention portion 660 configured to retain the plastic mold 655 to the inner lamination portion 610, and a second retention portion 665 configured to retain the plastic mold to the outer lamination portion 615. The plastic mold 655 also includes a plate 670 configured to connect the first retention portion 660 and the second retention portion 665 to each other, thereby creating a single secure element for retaining the inner lamination portion 610, the outer lamination portion 615, and the magnets 630. The rotor 600A is configured to rotate with respect to a stator.

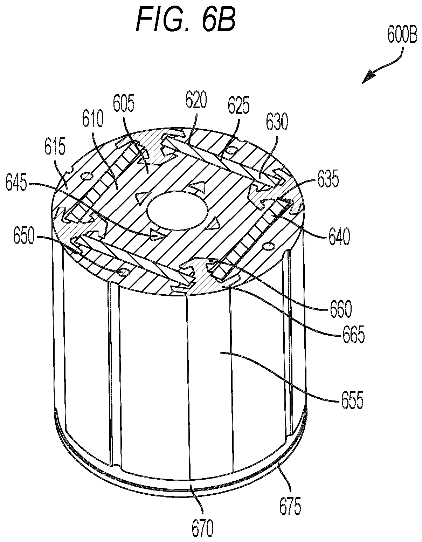

FIG. 6B illustrates the permanent magnet motor rotor 600B. In this embodiment, the rotor 600B includes the first axial support portion 645, the first retention portion 660, the second retention portion 665 and the plate 670 made of injection molded plastic, and the second axial support portion 650 and a plate portion 675 made of stainless-steel. The stainless-steel plate portion 675 is configured to connect to the second axial support portion 650. The rotor 600B is configured to rotate with respect to a stator.

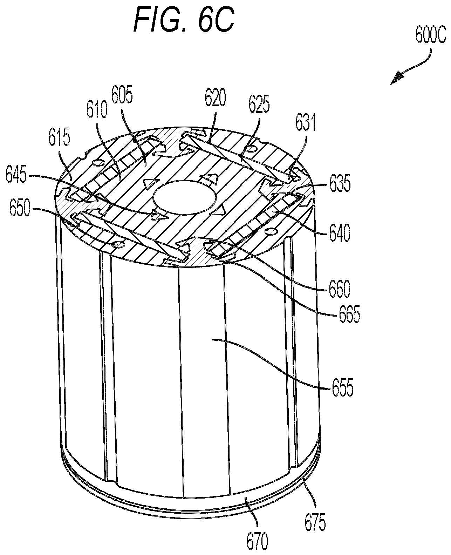

FIG 6C illustrates another embodiment for the rotor 600C. In this embodiment, both the first axial support portion 645 and the second axial support portion 650 are made of stainless-steel, and are configured to connect to the stainless-steel plate portion 675. The rotor 600C is configured to rotate with respect to a stator.

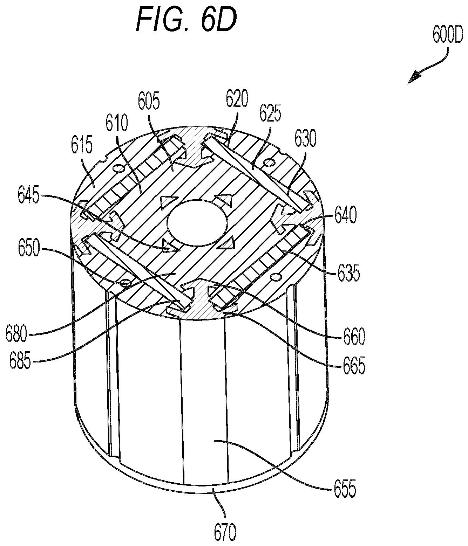

FIG 6D illustrates another embodiment for the rotor 600D. In this embodiment, an inner adhesive layer 680 and an outer adhesive layer 685 are used to hold the magnets 630 and the lamination stack 605 together. The adhesive used in the inner and outer adhesive layers (680, 685) may be an epoxy, a structural acrylic, cyanoacrylate, or other type of bonding material. In some instances, a Teflon mold may be used during the assembly process. The rotor 600D is configured to rotate with respect to a stator.

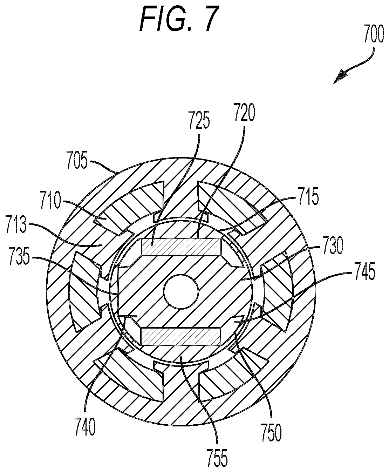

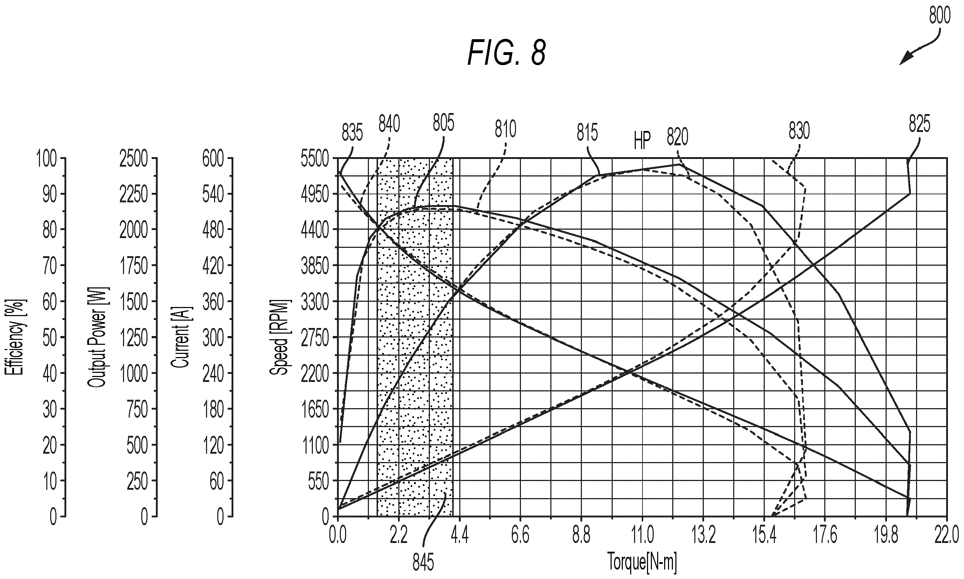

FIG. 7 illustrates a consequent pole motor 700, according to some embodiments. The motor 700 includes a stator 705 and a plurality of stator winding slots 710. The stator also includes stator teeth 713. The plurality of stator winding slots 710 are configured to receive a plurality of windings, wound around the stator teeth 713. The motor 700 also includes a rotor 715. The rotor 715 includes a plurality of permanent magnet slots 720 configured to receive permanent magnets 725. The rotor 715 includes a plurality of consequent poles 730. The consequent poles 730 have a length 735 and a width 740. In some embodiments, each of the consequent poles includes the same length and width. In other embodiments, the consequent poles have different lengths and widths. In some embodiments, the length 735 or the width 740 of the consequent pole 730 is controlled to impact the performance of the motor 700. The impacts of the dimensions of the consequent pole 730 are illustrated in FIG. 8 and described in detail below. The motor 700 also includes an air gap 745 between the plurality of permanent magnets 725 and the consequent poles 730. In some embodiments, the air gaps 745 are enclosed by an outer rib 750 of the lamination stack 755. In some embodiments, the air gaps 745 are ribless. In some embodiments, the consequent poles 730 are made of a non-magnetic material (e.g., rotor laminations, etc.). In some embodiments, the consequent pole motor 700 can include any of the motor rotor features described above with respect to FIGS. 5, 6A, 6B, 6C, and 6D. The rotor 715 is configured to rotate with respect to a stator.

FIG. 8 graphically illustrates the performance of an internal permanent magnet ("IPM") motor compared to the consequent pole motor 700, according to some embodiments. The graph includes IPM motor efficiency 805, IPM motor output power 815, IPM motor current 825, and IPM motor speed 835 when compared to a motor torque. The graph also includes consequent pole motor efficiency 810, consequent pole motor output power 820, consequent pole motor current 830, and consequent pole motor speed 840 when compared to a motor torque. The graph 800 also includes a highlighted operating region 845, within which both the IPM motor and the motor 700 nominally operate. As evidenced by the graph 800, the performance for both IPM motor and the motor 700 are similar within the operating region 845. In some examples, the IPM motor represented on the graph 800 has a magnet mass of approximately 55g, while the motor 700 has approximately a 28% mass reduction without significantly impacting the performance of the motor 700 within the operating region 845.

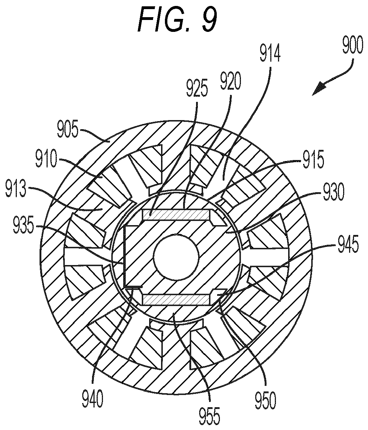

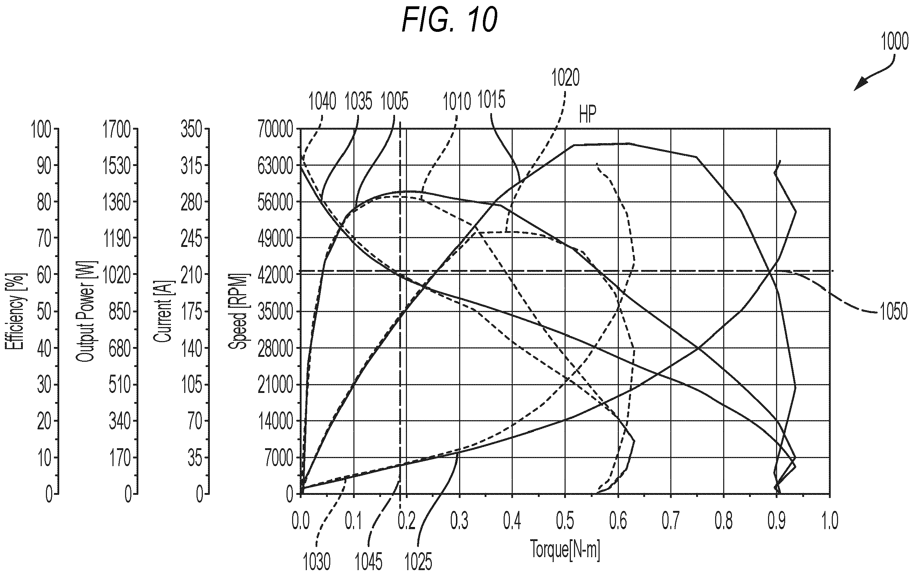

FIG. 9 illustrates a consequent pole motor 900, according to some embodiments. The motor 900 includes a stator 905 and a plurality of stator winding slots 910. The stator also includes stator teeth 913. The plurality of stator winding slots 910 are configured to receive a plurality of windings, wound around the stator teeth 913. The stator 905 includes air gaps 914 between the plurality of stator winding slots 910. The motor 900 also includes a rotor 915. The rotor 915 includes a plurality of permanent magnet slots 920 configured to receive permanent magnets 925. The rotor 915 includes a plurality of consequent poles 930. The consequent poles 930 have a length 935 and a width 940. In some embodiments, each of the consequent poles includes the same length and width. In other embodiments, the consequent poles have different lengths and widths. In some embodiments, the length 935 or the width 940 of the consequent pole 930 are controlled to impact the performance of the motor 900. The impacts of the dimensions of the consequent pole 930 are illustrated in FIG. 10 and described in detail below. The motor 900 also includes air gaps 945 between the plurality of magnets 925 and the consequent poles 930. In some embodiments, the air gaps 945 are enclosed by an outer rib 950 of the lamination stack 955. In some embodiments, the air gaps 945 are ribless. In some embodiments, the consequent poles 930 are made of a non-magnetic material (e.g., rotor laminations, etc.). In some embodiments, the consequent pole motor 900 can include any of the motor rotor features described above with respect to FIGS. 5, 6A, 6B, 6C, and 6D. The rotor 915 is configured to rotate with respect to a stator.

FIG. 10 provides a graph 1000 that illustrates a performance comparison between an internal permanent magnet motor and the motor 900. The graph includes IPM motor efficiency 1005, IPM motor output power 1015, IPM motor current 1025, and IPM motor speed 1035 when compared to a motor torque. The graph also includes consequent pole motor efficiency 1010, consequent pole motor output power 1020, consequent pole motor current 1030, and consequent pole motor speed 1040 when compared to a motor torque. The graph 1000 also includes a target operating load 1045 of approximately 0.19Nm, and a target operating speed 1050 of approximately 42,000 RPM. As evidenced by the graph 1000, at higher torque levels, the IPM motor performs with a greater efficiency 1005 and output power 1015 than the motor 900 efficiency 1010 and output power 1020. However, the performance for both IPM motor and the motor 900 are similar within the target operating load 1045 region. In some examples, the IPM motor represented on the graph 1000 has a magnet mass of approximately 79g, while the motor 900 has approximately a 36% mass reduction without significantly impacting the performance of the motor 900 within the target operating load 1045 region.

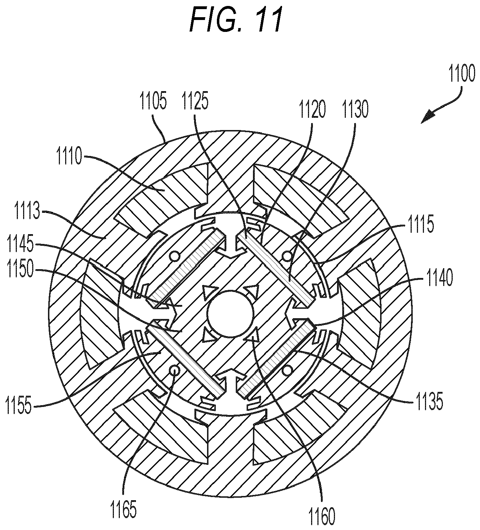

FIG. 11 illustrates an internal permanent magnet motor 1100, according to some embodiments. The motor 1100 includes a stator 1105 and a plurality of stator winding slots 1110. The stator 1105 also includes stator teeth 1113. The plurality of stator winding slots 1110 are configured to receive a plurality of windings, wound around the stator teeth 1113. The motor 1100 also includes a rotor 1115. The rotor 1115 includes a plurality of slots 1120, and each slot 1120 includes a magnet housing portion 1125 configured to receive a magnet 1130. The magnets 1130 include a length 1135 and a width 1140. The rotor 1115 further includes a lamination stack 1145 including an inner lamination portion 1150 and an outer lamination portion 1155. The inner lamination portion 1150 of the lamination stack 1145 includes a first axial support portion 1160. The outer lamination portion 1155 of the lamination stack 1145 includes a second axial support portion 1165. In some embodiments, a plastic mold is configured to retain the inner lamination portion and the outer lamination portion as previously described, and as illustrated in FIGS. 6A-6D. The motor 1100 does not include outer steel ribs that would otherwise enclose the magnets 1130.

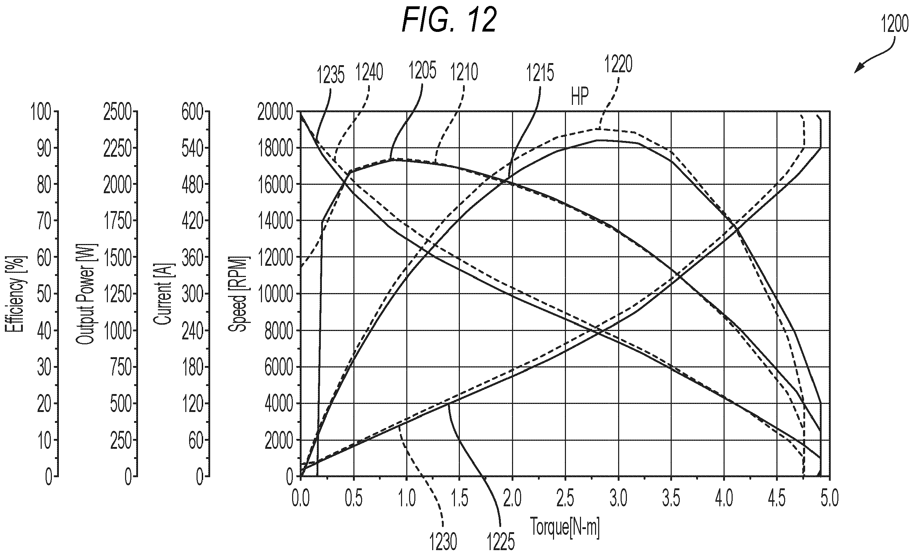

FIG. 12 is a graph 1200 that illustrates a performance comparison between a conventional internal permanent magnet motor and the motor 1100. The graph 1200 includes conventional IPM motor efficiency 1205, conventional IPM motor output power 1215, conventional IPM motor current 1225, and conventional IPM motor speed 1235 when compared to a motor torque. The graph 1200 also includes motor efficiency 1210, output power 1220, motor current 1230, and motor speed 1240 for the motor 1100 when compared to a motor torque. As evidenced by the graph 1200 the conventional IPM motor performs with approximately the same efficiency 1205 as the motor 1100 efficiency 1210. However, the motor 1100 produces, for example, approximately 5% more power than the conventional IPM motor.

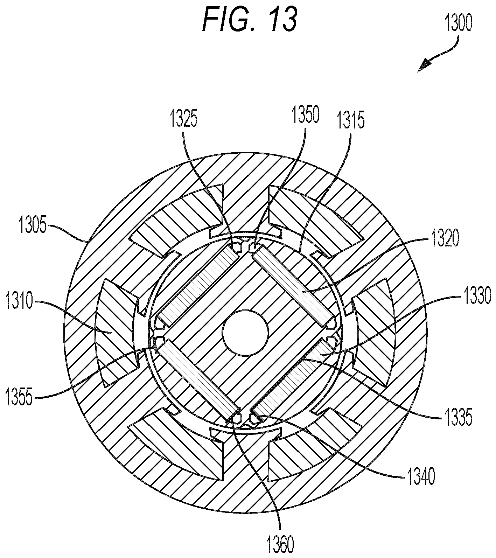

FIG. 13 illustrates a permanent magnet motor, according to some embodiments. In some embodiments, the motor 1300 is configured for use in the power tool 100. The motor 1300 includes an internal permanent magnet configuration. The motor 1300 includes a stator 1305 and a plurality of stator winding slots 1310. The plurality of stator winding slots 1310 are configured to receive a plurality of windings. The motor 1300 also includes a rotor 1315. In some embodiments, the rotor has an outer diameter of 22 millimeters ("mm"). The rotor 1315 includes a plurality of slots 1320, and each slot includes a magnet housing portion 1325 configured to receive a magnet 1330. The magnet 1330 includes a length 1335 and a width 1340. The rotor 1315 further includes a lamination stack 1345 and air gaps 1350. The air gaps 1350 include a length 1355 and a width 1360. In some embodiments, the size of the air gaps 1350, or the length 1355 and width 1360 of the air gaps 1350, increases or decreases along with the size of the magnet 1330. For example, the length 1335 of the magnet 1330 may be decreased in order to reduce the manufacturing cost of the motor 1300. Accordingly, the length 1355 of the air gap may be increased along with the reduced magnet 1330 size. Alternatively, in some embodiments, the lamination stack 1345 is configured to occupy the space of the reduced magnet 1330 length 1335.

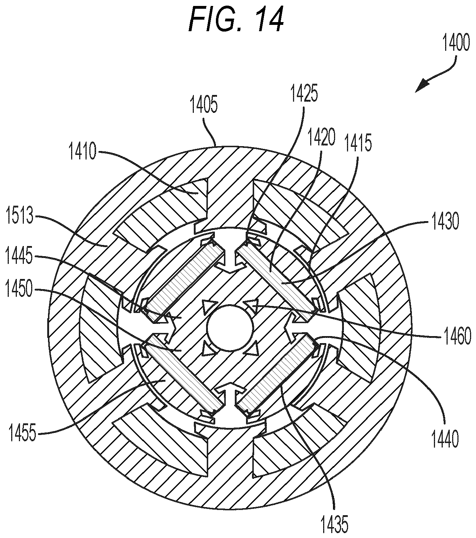

FIG. 14 illustrates a permanent magnet motor, according to some embodiments. The motor 1400 includes a stator 1405 and a plurality of stator winding slots 1410. The stator also includes stator teeth 1413. The plurality of stator winding slots 1410 are configured to receive a plurality of windings, wound around the stator teeth 1413. The motor 1400 also includes a rotor 1415. The rotor 1415 includes a plurality of slots 1420, and each slot includes a magnet housing portion 1425 configured to receive a magnet 1430. The magnets 1430 includes a length 1435 and a width 1440. The rotor further includes a lamination stack 1445 including an inner lamination portion 1450 and an outer lamination portion 1455. The inner lamination portion 1450 of the lamination stack 1445 includes a first axial support portion 1460. In some embodiments, the motor 1400 is similar to the motor 1100.

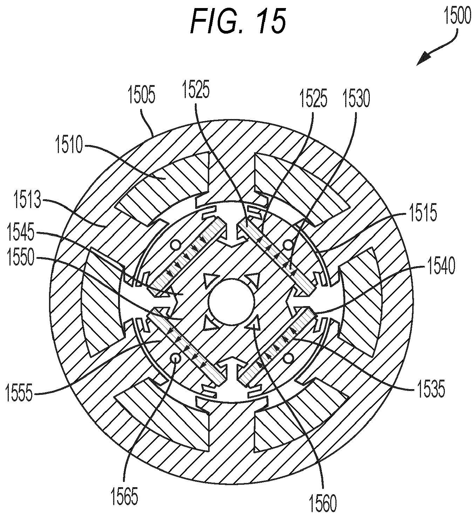

FIG. 15 illustrates an internal permanent magnet motor, according to some embodiments. The motor 1500 includes a stator 1505 and a plurality of stator winding slots 1510. The stator also includes stator teeth 1513. The plurality of stator winding slots 1510 are configured to receive a plurality of windings, wound around the stator teeth 1513. The motor 1500 also includes a rotor 1515. The rotor 1515 includes a plurality of slots 1520, and each slot includes a magnet housing portion 1525 configured to receive a magnet 1530. The magnets 1530 includes a length 1535 and a width 1540. The rotor further includes a lamination stack 1545 including an inner lamination portion 1550 and an outer lamination portion 1555. The inner lamination portion 1550 of the lamination stack 1545 includes a first axial support portion 1560. The outer lamination portion 1555 of the lamination stack 1545 includes a second axial support portion 1565. In some embodiments, a plastic mold is configured to retain the inner lamination portion and the outer lamination portion as previously described, and as illustrated in FIGS. 6A-6D.

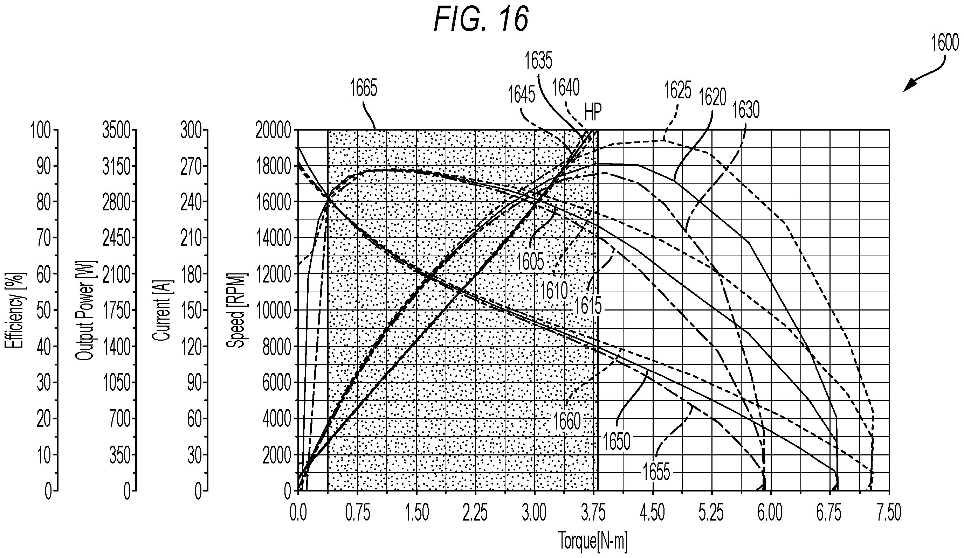

FIG. 16 provides a graph 1600 that illustrates a performance comparison between the motors 1300, 1400, and 1500. The graph includes efficiency 1605, output power 1620, current 1635, and speed 1650 of motor 1300 when compared to a motor torque. The graph includes efficiency 1610, output power 1625, current 1640, and speed 1655 of motor 1400 when compared to a motor torque. The graph also includes efficiency 1615, output power 1630, current 1645, and speed 1660 of motor 1500 when compared to a motor torque. The graph 1600 also includes a target operating region 1665 that spans from approximately 0.5Nm to 3.9Nm of motor torque. As evidenced by the graph 1600, at higher torque levels, the motor 1400 performs with a greater efficiency 1610 and output power 1625 than the motor 1300 efficiency 1605 and output power 1620, as well as the motor 1500 efficiency 1615 and output power 1630. Table 1 additionally illustrates comparisons between the motors 1300, 1400, 1500. The motor 1400 performs at a 6% greater Watt Newton meter (WNm) and a 7% greater peak power (W) than the motor 1300, while having approximately the same efficiency and magnet mass. On the other hand, the motor 1500 achieves a 1% greater WNm with a -1% lower peak power while having a 35% reduction in magnet mass.

| **Table 1: Performance Comparison** | | | |
|---|---|---|---|
| | Motor 1300 | Motor 1400 | Motor 1500 |
| Peak WNm (power area) | 7,488 WNm | +6% | +1% |
| Peak Power | 3,180 W | +7% | -1% |
| Average Efficiency (power area) | 69.8% | 0% | -1% |
| Peak Efficiency | 89% | 0% | 0% |
| Magnet Mass | 55g | 0% | -35% |

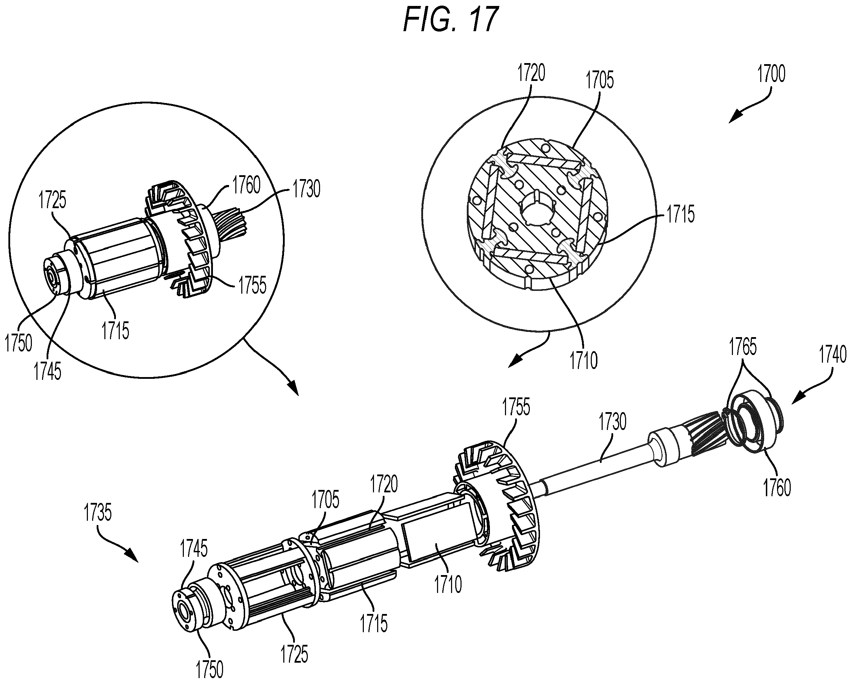

FIG. 17 illustrates a rotor assembly 1700 for use with the power tool 100. The rotor assembly 1700 includes a plurality of slots 1705, and each slot 1705 is configured to receive a magnet 1710. The magnet 1710 may be composed of a rare earth metal, such as neodymium, and can be secured to the slot 1705, as previously described. The rotor assembly 1700 includes a lamination stack 1715 including a plurality of gaps 1720. In some instances, the gaps 1720 are filled with an injection molded material, such as injection molded plastic 1725, or stainless steel. The rotor assembly 1700 also includes a shaft 1730 extending through the rotor assembly 1700 from a first end 1735 of the rotor assembly 1700 to a second end 1740 of the rotor assembly 1700. A first bearing 1745 is located at the first end 1735 of the rotor assembly 1700 along with a sense magnet 1750. The rotor assembly 1700 also includes a fan 1755 located at the second end 1740 of the rotor assembly 1700. The rotor assembly 1700 further includes a second bearing 1760 located at the second end 1740 of the rotor assembly 1700, and a plurality of C-rings 1765 configured to couple the second bearing 1760 to the shaft 1730.

### REPRESENTATIVE FEATURES

Representative features are set out in the following clauses, which stand alone or may be combined, in any combination, with one or more features disclosed in the text and/or drawings of the specification.

Clause 1. A power tool comprising: a battery pack interface configured to receive a battery pack; and a motor including: a stator including a plurality of stator teeth configured to receive a plurality of stator windings, and a rotor configured to rotate with respect to the stator, the rotor including: a first permanent magnet within the rotor, a second permanent magnet within the rotor, and a consequent pole located between the first permanent magnet and the second permanent magnet, the consequent pole having a length and a width, the consequent pole being made of a non-magnetic material.

Clause 2. The power tool of clause 1, wherein the first permanent magnet and the second permanent magnet are composed of a rare earth metal.

Clause 3. The power tool of any preceding clause, wherein the rotor includes a lamination stack including an inner lamination portion and an outer lamination portion, wherein an air gap is located between the inner lamination portion and the outer lamination portion.

Clause 4. The power tool of clause 3, wherein the consequent pole is constructed from the lamination stack.

Clause 5. The power tool of clause 3, wherein the inner lamination portion includes a first axial support portion, and the outer lamination portion includes a second axial support portion.

Clause 6. The power tool of clause 3, rotor includes an outer diameter of approximately 22 millimeters.

Clause 7. The power tool of any preceding clause, wherein the rotor further includes: a lamination stack; a first slot including a first magnet housing portion configured to receive the first permanent magnet; a second slot including a second magnet housing portion configured to receive the second permanent magnet; and a plurality of air gaps, wherein each of the plurality of air gaps includes an injection molded material.

Clause 8. The power tool of clause 7, wherein one of the plurality of air gaps is enclosed by an outer rib of the lamination stack.

Clause 9. A power tool comprising: a battery pack interface configured to receive a battery pack; and a consequent pole motor including: a stator including a plurality of stator teeth configured to receive a plurality of stator windings, and a rotor configured to rotate with respect to the stator, the rotor including: a first permanent magnet within a first slot of the rotor, a second permanent magnet within a second slot of the rotor, a first consequent pole between the first permanent magnet and the second permanent magnet, the first consequent pole having a first length and a first width, and a second consequent pole between the first permanent magnet and the second permanent magnet, the second consequent pole having a second length and a second width.

Clause 10. The power tool of clause 9, wherein the first permanent magnet and the second permanent magnet are composed of a rare earth metal.

Clause 11. The power tool of clause 9 or 10, wherein the rotor includes a lamination stack including an inner lamination portion and an outer lamination portion, wherein an air gap is located between the inner lamination portion and the outer lamination portion, and wherein the air gap is enclosed by an outer rib of the lamination stack.

Clause 12. The power tool of clause 11, wherein the first consequent pole and the second consequent pole are constructed from the lamination stack.

Clause 13. The power tool of clause 11, wherein the inner lamination portion includes a first axial support portion, and the outer lamination portion includes a second axial support portion.

Clause 14. The power tool of any of clauses 9 to 13, wherein the rotor further includes: a lamination stack; a first slot including a first magnet housing portion configured to receive the first permanent magnet; a second slot including a second magnet housing portion configured to receive the second permanent magnet; and a plurality of air gaps, wherein each of the plurality of air gaps includes an injection molded material, wherein one of the plurality of air gaps is enclosed by an outer rib of the lamination stack.

Clause 15. A consequent pole motor comprising: a stator including a plurality of stator teeth configured to receive a plurality of stator windings; and a rotor configured to rotate around the stator, the rotor including: a lamination stack including an inner lamination portion and an outer lamination portion, a first permanent magnet located within a first slot of the lamination stack, the first slot being between the inner lamination portion and the outer lamination portion, a second permanent magnet located within a second slot of the lamination stack, the second slot being between the inner lamination portion and the outer lamination portion, a first consequent pole located between the first permanent magnet and the second permanent magnet, the first consequent pole having a first length and a first width, a second consequent pole located between the first permanent magnet and the second permanent magnet, the second consequent pole having a second length and a second width, and an air gap located between the inner lamination portion and the outer lamination portion.

Clause 16. The consequent pole motor of clause 15, wherein the first consequent pole and the second consequent pole are constructed from the lamination stack.

Clause 17. The consequent pole motor of clauses 15 or 16, wherein: the first permanent magnet and the second permanent magnet are composed of a rare earth metal; and the first consequent pole and the second consequent pole are constructed from a non-magnetic material.

Clause 18. The consequent pole motor of any of clauses 15 to 17, wherein the air gap is enclosed by an outer rib of the lamination stack.

Clause 19. The consequent pole motor of any of clauses 15 to 18, wherein the air gap is filled with an injection molded material.

Clause 20. The consequent pole motor of any of clauses 15 to 19, wherein: the rotor further includes a first retention portion configured to retain the inner lamination portion and a second retention portion configured to retain the outer lamination portion; and the first retention portion and the second retention portion are connected via a plate.

Thus, embodiments described herein provide a power tool including a consequent pole motor. Various features and advantages are set forth in the following claims.

## Claims

1. A power tool comprising:
a battery pack interface configured to receive a battery pack; and
a motor including:
a stator including a plurality of stator teeth configured to receive a plurality of stator windings, and
a rotor configured to rotate with respect to the stator, the rotor including:
a first permanent magnet within the rotor,
a second permanent magnet within the rotor, and
a consequent pole located between the first permanent magnet and the second permanent magnet, the consequent pole having a length and a width, the consequent pole being made of a non-magnetic material.

2. The power tool of claim 1, wherein the first permanent magnet and the second permanent magnet are composed of a rare earth metal.

3. The power tool of claim 1, wherein the rotor includes a lamination stack including an inner lamination portion and an outer lamination portion, wherein an air gap is located between the inner lamination portion and the outer lamination portion.

4. The power tool of claim 3, wherein the consequent pole is constructed from the lamination stack.

5. The power tool of claim 3, wherein the inner lamination portion includes a first axial support portion, and the outer lamination portion includes a second axial support portion.

6. The power tool of claim 3, rotor includes an outer diameter of approximately 22 millimeters.

7. The power tool of claim 1, wherein the rotor further includes:
a lamination stack;
a first slot including a first magnet housing portion configured to receive the first permanent magnet;
a second slot including a second magnet housing portion configured to receive the second permanent magnet; and
a plurality of air gaps, wherein each of the plurality of air gaps includes an injection molded material.

8. The power tool of claim 7, wherein one of the plurality of air gaps is enclosed by an outer rib of the lamination stack.

9. A consequent pole motor comprising:
a stator including a plurality of stator teeth configured to receive a plurality of stator windings; and
a rotor configured to rotate around the stator, the rotor including:
a lamination stack including an inner lamination portion and an outer lamination portion,
a first permanent magnet located within a first slot of the lamination stack, the first slot being between the inner lamination portion and the outer lamination portion,
a second permanent magnet located within a second slot of the lamination stack, the second slot being between the inner lamination portion and the outer lamination portion,
a first consequent pole located between the first permanent magnet and the second permanent magnet, the first consequent pole having a first length and a first width,
a second consequent pole located between the first permanent magnet and the second permanent magnet, the second consequent pole having a second length and a second width, and
an air gap located between the inner lamination portion and the outer lamination portion.

10. The consequent pole motor of claim 9, wherein the first consequent pole and the second consequent pole are constructed from the lamination stack.

11. The consequent pole motor of claim 9, wherein:
the first permanent magnet and the second permanent magnet are composed of a rare earth metal; and
the first consequent pole and the second consequent pole are constructed from a non-magnetic material.

12. The consequent pole motor of claim 9, wherein the air gap is enclosed by an outer rib of the lamination stack.

13. The consequent pole motor of claim 9, wherein the air gap is filled with an injection molded material.

14. The consequent pole motor of claim 9, wherein:
the rotor further includes a first retention portion configured to retain the inner lamination portion and a second retention portion configured to retain the outer lamination portion; and
the first retention portion and the second retention portion are connected via a plate.
